Europäisches Patentamt

**European Patent Office**

**Office européen des brevets**

(11) Veröffentlichungsnummer: **0 013 911**
**B1**

(12) ## EUROPÄISCHE PATENTSCHRIFT

(45) Veröffentlichungstag der Patentschrift:
**08.06.83**

(51) Int. Cl.³: **F 16 B 13/02**

(21) Anmeldenummer: **80100119.9**

(22) Anmeldetag: **11.01.80**

(54) **Spreizdübel aus Kunststoff.**

(30) Priorität: **12.01.79 DE 2901066**

(43) Veröffentlichungstag der Anmeldung:
**06.08.80 Patentblatt 80/16**

(45) Bekanntmachung des Hinweises auf die Patenterteilung:
**08.06.83 Patentblatt 83/23**

(84) Benannte Vertragsstaaten:
**AT BE CH FR GB IT LU NL SE**

(56) Entgegenhaltungen:
**CH-A-434 885**
**CH-A-496 177**
**CH-A-555 009**
**DE-A-1 750 492**
**DE-A-2 108 737**
**DE-A-2 211 713**
**DE-U-7 800 232**
**FR-A-2 057 121**
**US-A-1 367 080**
**US-A-1 688 087**

(73) Patentinhaber: **Tox-Dübel-Werk Richard W. Heckhausen KG, D-7762 Bodman-Ludwigshafen 1 (DE)**

(72) Erfinder: **Riedel, Josef, Hutbühlstrasse 6, D-7770 Überlingen 12 (DE)**

(74) Vertreter: **Wallach, Curt, Dipl.-Ing. et al, Postfach 920, D-8000 München 33 (DE)**

Spreizdübel aus Kunststoff

Die Erfindung betrifft einen Spreizdübel aus Kunststoff mit einem durchgehenden Schraubeneinsatzloch und mehreren Spreizsegmenten, die durch Längsschlitze des Dübelkörpers gebildet sind, welche sich zwischen dem ringförmigen Kopfteil und dem ringförmigen Fussteil erstrekken, in welch letzterem durch eine konische Holzgewindeschraube ein Muttergewinde einschneidbar ist, welches eine axiale Verspannung des Dübelkörpers ermöglicht.

Ein derartiger Spreizdübel ist aus der DE-A-2 254 602 bekannt. Die Segmente derartiger Spreizdübel legen sich beim Eindrehen der konisch gestalteten Holzgewindeschraube der Bohrlochwandung an, weil durch das Eindringen der Schraube die Segmente radial nach aussen verdrängt werden. Finden diese Segmente keine Bohrlochwandung vor, dann ergibt sich eine Knickfunktion, indem durch die axiale Verspannung die Dübelsegmente nach aussen ausknikken, wenn sie in einem Hohlstein oder hinter einer Platte zu liegen kommen. Der Querschnitt der durch die Schlitze gebildeten Stege, die aussen mit Rippen oder Stegen versehen sein können, war bei den bekannten Spreizdübeln über die Länge im wesentlichen gleich und die Auszugskraft eines in ein Bohrloch eingesetzten Spreizdübels war im wesentlichen abhängig von dem Verhältnis der Durchmesser von Einsatzloch und Einsatzschraube bzw. dem Nenndurchmesser des Dübels und dem Durchmesser des Dübeleinsatzloches in der Wand.

Der Erfindung liegt die Aufgabe zugrunde, Spreizdübel der angegebenen Gattung weiter derart zu verbessern, dass selbst bei ungünstigen Durchmesserverhältnissen eine hohe Auszugskraft gewährleistet wird, indem eine günstigere Spreizwirkung eine Anpassung an die unterschiedlichsten Durchmesserverhältnisse ermöglicht.

Gemäss der Erfindung wird diese Aufgabe dadurch gelöst, dass die Spreizsegmente durch Einschnitte in einander überlappende Schuppen unterteilt sind, dass die Einschnitte schräg bzw. auf einem Kegelmantel von aussen nach innen zum Dübelfuss hin verlaufend angeordnet sind und dass die Schuppen über Stege am Schraubeneinsatzloch miteinander in Verbindung stehen.

Hierdurch wird erreicht, dass sich die Schuppen bei der axialen Verspannung keilförmig übereinander schieben, was zur Folge hat, dass der für die radiale Spreizkraft massgebliche wirksame Querschnitt der Stege infolge Verkürzung derselben vergrössert wird. Dadurch, dass die Schuppen einzeln von dem jeweiligen Verbindungssteg vorstehen, wird eine individuelle Berührung mit der Bohrlochwandung auch bei unregelmässig geformten Löchern oder Hohlsteinen gewährleistet, wobei verhältnismässig grosse Durchmesserdifferenzen überbrücke werden können, weil die einzelnen Schuppen bei ihrer Spreizung vom Steg abbrechen und sich unter der Quetschwirkung nach aussen verschieben können.

Es ist zwar durch die CH-A-496 177 bereits ein Dübel bekannt, bei dem durch axiale Verspannung über konische Gleitflächen eine radiale Aufspreizung erreicht wird.

Hierbei handelt es sich jedoch nicht um einen Kunststoffspreizdübel, sondern um einen aus mehreren axial aufeinanderfolgenden Hülsen bestehenden metallischen Dübel für eine Befestigungsschraube mit Maschinengewinde, die in einen fertigen Gewindeabschnitt am Dübelfuss einschraubbar ist. Die einzelnen axial aufeinanderfolgenden Abschnitte bestehen jeweils aus einer geschlossenen zylindrischen Hülse, die über einen Kegelabschnitt mit einer geschlitzten zylindrischen Hülse verbunden sind, die jeweils den ungeschlitzten Hülsenabschnitt des folgenden Dübelabschnitts umgreift. Die einzelnen Abschnitte sind mittels eines Zinn- oder Harzbades miteinander verschmolzen, was bei einem Kunststoffdübel zu einer vollständigen Verschmelzung und Funktionsunfähigkeit führen würde.

Zweckmässigerweise sind die Einschnitte derart nach innen nach dem Dübelfuss konisch verlaufend angeordnet, dass die so gebildeten Spreizschuppen sich entgegen der Auszugsrichtung an der Bohrlochwandung abstützen. Hierdurch wird erreicht, dass beim Ansetzen einer Auszugskraft die Schuppen, die sich mit ihrem Aussenrand an der Bohrlochwandung abstützen, noch weiter gegen die Borhlochwandung verspannt werden, und zwar jede einzelne Lamelle an der von ihr berührten Stelle der Bohrlochwandung.

Je nach Längenänderung des Dübels durch die axiale Verspannung können dadurch grössere Bohrlochdurchmesser überbrückt oder verschiedene Schraubendurchmesser verwendet werden, ohne dass sich die Haltewerte verringern, weil durch das axiale Aufeinanderschieben der Dübel zwar kürzer, aber im Durchmesser in relativ grossen Grenzen vergrössert werden kann. Die Verwendung einer schraubenlinienförmigen Teilung der Dübelsegmente mit Linksdrall der Schlitze begünstigt weiter die Verwendung unterschiedlicher Schraubendurchmesser.

Weitere zweckmässige Ausgestaltungen der Erfindung ergeben sich aus den Unteransprüchen.

Nachstehend werden zwei Ausführungsbeispiele der Erfindung anhand der Zeichnung beschrieben. In der Zeichnung zeigen:

Fig. 1 eine perspektivische Ansicht eines erfindungsgemäss ausgebildeten Spreizdübels,

Fig. 2 einen Axialschnitt des in Fig. 1 dargestellten Dübels,

Fig. 3 einen Querschnitt nach der Linie III–III gemäss Fig. 1,

Fig. 4 eine Seitenansicht einer abgewandelten Ausführungsform eines Dübels,

Fig. 5 eine axiale Ansicht eines Dübels gemäss Fig. 4,

Fig. 6 einen Schnitt nach der Linie VI–VI gemäss Fig. 7,

Fig. 7 einen Schnitt nach der Linie VII–VII gemäss Fig. 6.

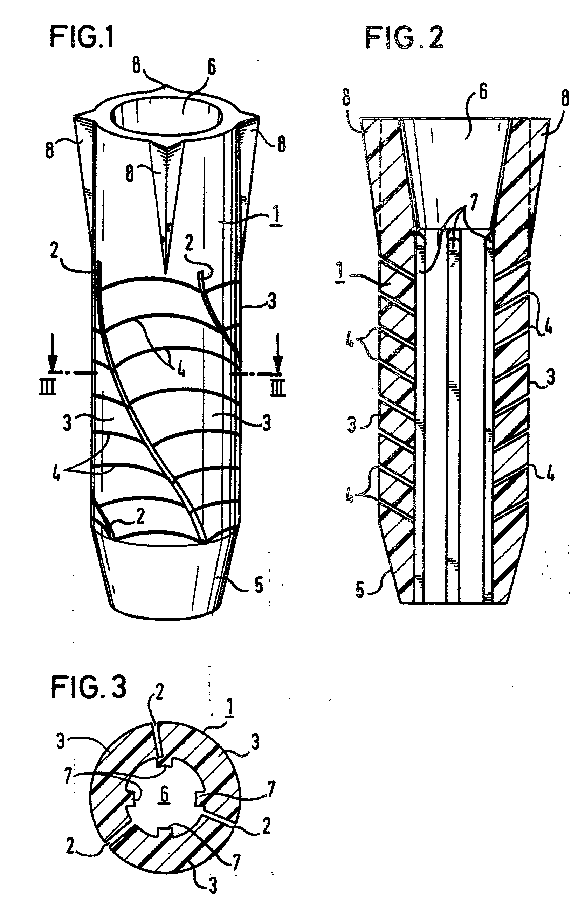

Der vorzugsweise aus Kunststoff im Spritzverfahren hergestellte Dübel weist einen ringförmigen geschlossenen Kopfteil 1 und durch schraubenlinienförmig geführte Schlitze 2 gebildete Dübelsegmente auf, an die ein Dübelfuss 5 in Form eines geschlossenen Ringes anschliesst. Die Dübelsegmente werden von übereinandergefügten Schuppen 3 gebildet, die durch quer verlaufende Einschnitte 4 gebildet sind. Der Dübel weist ein Schraubeneinsatzloch 6 auf, welches im Kopfteil 1 konisch ausgebildet ist und im übrigen Teil bis zum Dübelfuss 5 hin zylindrisch verläuft. In das Schraubeneinsatzloch 6 stehen mit Dübelkopf 1, Dübelfuss 5 und den Schuppen 3 integral geformte, axial verlaufende Längsstege 7 ein, von denen wie aus Fig. 3 ersichtlich, vier Stück im gleichen Winkelabstand zueinander angeordnet sind. Die Einschnitte 4, die die Berührungsflächen der Schuppen 3 bilden, liegen jeweils auf einem Kegelmantel, der sich von aussen her nach unten nach dem Dübelfuss 5 hin verjüngt. Dadurch wird erreicht, dass beim axialen Verspannen des Dübels die Schuppen aufeinander gleiten und mit ihren äusseren Stützrändern sich entgegen der Ausziehrichtung gegen die Bohrlochwandung abstützen, wodurch der Ausziehwiderstand beträchtlich erhöht wird. Es soll jedoch für die Erfindung auch vorbehalten bleiben, die Schuppen in umgekehrter Richtung anzuordnen, insbesondere für Sonderfälle, bei denen eine Wiederentnahme des Dübels aus dem Bohrloch erwünscht ist.

Die drei Dübelsegmente im Mittelabschnitt des Dübels werden gemäss dem dargestellten Ausführungsbeispiel durch schraubenlinienförmig mit Linksdrall verlaufende Schlitze 2 gebildet, wodurch die Möglichkeit erlangt wird, das frei ins Mauerwerk stehende Dübelteil schnell zu einer Rosette zu verformen, was insbesondere bei Plattenbefestigungen und Hohlbaustoffen von Vorteil ist.

Gemäss dem dargestellten Ausführungsbeispiel besitzt der Dübel am Dübelkopf in Längsrichtung verlaufende Rippen 8, die als Drehsicherung dienen. Es bleibt vorbehalten, weitere Drehsicherungen am Dübelmantel und/oder am Dübelfuss 5 anzuordnen.

Gemäss dem dargestellten Ausführungsbeispiel ist das Schraubeneinsatzloch 6 im Mittelteil und im Fussteil des Dübels mit gleichem Durchmesser ausgebildet. Es soll jedoch auch vorbehalten bleiben, den Durchmesser des Einsatzloches im Dübelfuss 5 zu verringern, wenn ein tieferes Einschneiden eines Muttergewindes erwünscht wird.

Beim Eindrehen einer Schraube in das Schraubeneinsatzloch 6 eines in einem Bohrloch eingefügten Dübels wird sich das Schraubengewinde mehr oder weniger tief in die inneren Längsstege 7 einschneiden, und dabei bereits die Schuppen 3 radial nach aussen spreizen, wobei sie aufeinander ablaufen. Sobald sich die Schraube in den Fussteil 5 einschraubt und der Schraubenkopf auf sein Widerlager trifft, erfolgt eine axiale Verspannung, wodurch die Schuppen 3 durch Keilwirkung auf ihren durch die Einschnitte 4 gebildeten Berührungsgleitflächen aufeinander laufen und so den äusseren Dübelmantel über den gesamten spreizbaren Mittelabschnitt im Durchmesser vergrössern, wobei sich die einzelnen Schuppen bzw. Lamellen individuell der betreffenden Stelle der Bohrlochwandung anpassen können, d.h. einzelne Lamellen können in Ausbrechungen des Bohrloches bzw. Erweiterungen eingreifen, wodurch sich eine besonders günstige Kraftverteilung mit erhöhter Auszugsfestigkeit auch bei unregelmässig geformten Bohrlöchern ergibt.

Der Konuswinkel der Einschnitte 4 kann den jeweiligen Bedürfnissen entsprechend gewählt werden. Je steiler die Einschnitte verlaufen, desto grösser wird die Spreizkraft, und je flacher sie verlaufen, desto grösser wird der überbrückbare Durchmesser.

Die einzelnen Schuppen 3 bzw. Lamellen sind wie erwähnt, durch die inneren Längsstege 7 miteinander verbunden, die den Dübel zusammenhalten. Sobald sich die eingedrehte Schraube ihr Gewinde im Dübelfuss 5 eingeschnitten hat, ist ein solcher Zusammenhalt nicht mehr erforderlich, und deshalb können beim axialen Zusammenziehen des Dübels oder auch schon vorher, die Schuppen voneinander bzw. von den Längsstegen 7 abreissen, wodurch sich eine besonders günstige individuelle Aufspreizung ergibt.

Gemäss dem dargestellten Ausführungsbeispiel sind die beim unverspannten Dübel aussen freiliegenden Ringabschnitte der Schuppen 3 glatt ausgebildet. Diese könnten ebenfalls noch mit in Längsrichtung oder Querrichtung verlaufenden Rippen ausgestattet sein. Anstelle der Längsstege 7 könnten die Schuppen 3 auch durch einen geschlossenen Hülsenmantel verbunden sein, der das Schraubeneinsatzloch begrenzt, jedoch ist die Ausgestaltung mit Stegen schon im Hinblick auf die Möglichkeit verschiedener Schraubendurchmesser zu bevorzugen. Es soll jedoch vorbehalten bleiben, die Schuppen auch auf andere Weise ursprünglich miteinander in Verbindung zu halten.

Bei dem dargestellten Ausführungsbeispiel sind die Dübelsegmentschuppen 3 im Längsschnitt (Fig. 2) parallelflankig, d.h. in Form eines Parallelogramms ausgebildet, was durch die gleichmässige Stärke der Einschnitte 4 bedingt ist. Es soll jedoch für die Erfindung auch vorbehalten bleiben, die Einschnitte 4 derart vorzunehmen, dass die Querschnittsform der Schuppen keilförmig, d.h. entweder trapezförmig oder dreieckförmig verläuft, was für bestimmte Anwendungsfälle infolge der sich hierbei ergebenen Keilwirkung nützlich sein kann.

Der Dübelfuss 5 ist vorzugsweise konisch verjüngt ausgebildet, um das Einstecken des Dübels in das Bohrloch zu erleichtern.

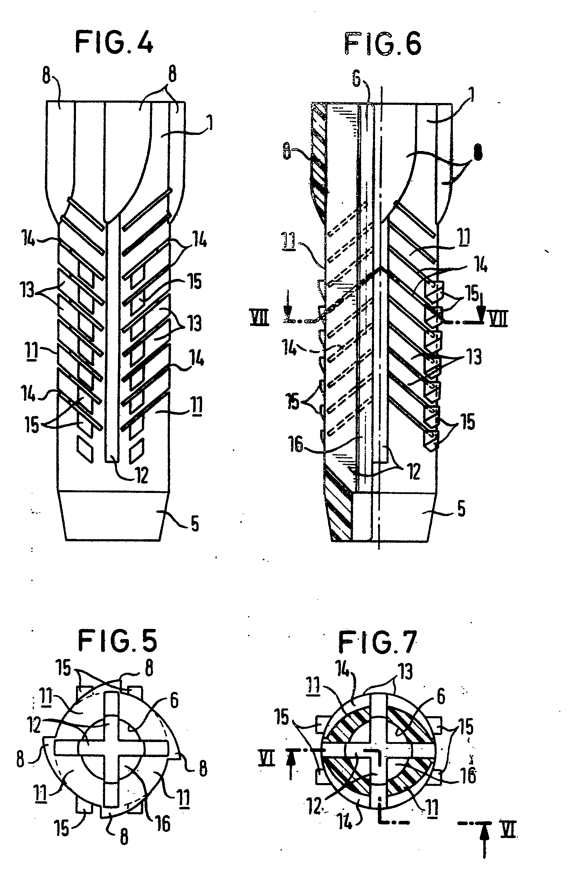

Bei dem in Fig. 4 und 5 dargestellten Ausführungsbeispiel ist der Dübelmantel mit vier achsparallelen zwischen Kopfteil 1 und Dübelfuss 5 verlaufenden Längsschlitzen 12 versehen, die im Kopfteil innerhalb der Rippen 8 auslaufen. Die so gebildeten vier Spreizsegmente 11 weisen schräg verlaufende Einschnitte 14 auf, die vom Dübelmantel her eingeschnitten bzw. eingeformt sind und die Schuppen 13 bilden, deren Zusammenhalt durch den von den Einschnitten 14 nicht getroffenen Querschnitt der Spreizsegmente erfolgt. Die Schrägstellung der Einschnitte 14 benachbarter Spreizsegmente 11 ist entgegengesetzt gerichtet, so dass die Einschnitte 14 an den Längsschlitzen 12 V-förmig zusammenlaufen und zwar abwechselnd mit nach dem Kopfteil 1 bzw. dem Dübelfuss hin gerichteten Scheitel. Innen weisen die Spreizsegmente 11 eine der Schraubenführung dienende Rille 16 auf. Jede Schuppe 13 trägt aussen einen Vorsprung in Gestalt eines Sägezahns 15, die durch Einkrallen in der Bohrlochwandung den Ausziehwiderstand weiter erhöhen. Die Zähne 15 sind benachbart jeweils zu jenen Längsschlitzen 12 an den Schuppen angesetzt, die durch den Scheitel der V-förmigen Einschnitte 14 nach dem Dübelfuss 5 hin gerichtet sind. Benachbart zu diesen Schlitzen enden, wie aus Fig. 4 ersichtlich ist, die Einschnitte 14 kurz vor dem Rand der Spreizsegmente. Es ergeben sich somit wie aus Fig. 4, 5 und 7 ersichtlich ist auf gegenüberliegenden Seiten des Dübels je zwei Rillen von Zahnpaaren.

Der Dübel kann gemäss den dargestellten Ausführungsbeispielen als Durchsteckdübel ausgebildet sein. Er kann jedoch auch einen gegebenenfalls abtrennbaren Flansch am Dübelkopf aufweisen.

## Patentansprüche

1. Spreizdübel aus Kunststoff mit einem durchgehenden Schraubeneinsatzloch (6) und mehreren Spreizsegmenten (11), die durch Längsschlitze (2; 12) des Dübelkörpers gebildet sind, welche sich zwischen dem ringförmigen Kopfteil (1) und dem ringförmigen Fussteil (5) erstrecken, in welch letzterem durch eine konische Holzgewindeschraube ein Muttergewinde einschneidbar ist, welches eine axiale Verspannung des Dübelkörpers ermöglicht, dadurch gekennzeichnet, dass die Spreizsegmente (11) durch Einschnitte (4; 14) in einander überlappende Schuppen (3; 13) unterteilt sind, dass die Einschnitte (4; 14) schräg bzw. auf einem Kegelmantel von aussen nach innen zum Dübelfuss (5) hin verlaufend angeordnet sind, und dass die Schuppen (3) über Stege (7) am Schraubeneinsatzloch (6) miteinander in Verbindung stehen.

2. Spreizdübel nach Anspruch 1, dadurch gekennzeichnet, dass die Stege (7) achsparallel verlaufen und in den Querschnitten des Schraubeneinsatzloches (6) einstehen.

3. Spreizdübel nach den Ansprüchen 1 und 2, dadurch gekennzeichnet, dass die Längsstege (7) bis in das Loch des Dübelfusses (5) hinein verlaufen.

4. Spreizdübel nach Anspruch 1, dadurch gekennzeichnet, dass die Längsschlitze (2) in an sich bekannter Weise schraubenlinienförmig geführt sind und entgegen dem Drehsinn des Schraubengewindes der Holzgewindeschraube eingeschnitten sind.

5. Spreizdübel nach den Ansprüchen 1 bis 4, dadurch gekennzeichnet, dass die Schuppen (3) im Längsschnitt betrachtet keilförmig von innen nach aussen verjüngt ausgebildet sind.

6. Spreizdübel nach einem der Ansprüche 1 bis 5, dadurch gekennzeichnet, dass er durch vier achsparallele Längsschlitze (12), die im Kopfteil (1) innerhalb von äusseren Drehsicherungsrippen (8) auslaufen, in vier Spreizsegmente (11) unterteilt ist.

7. Spreizdübel nach Anspruch 6, dadurch gekennzeichnet, dass alle Einschnitte (14) benachbarter Spreizsegmente (11) in entgegengesetzter Richtung angestellt sind und an den Längsschlitzen (12) V-förmig zusammenlaufen.

8. Spreizdübel nach einem der Ansprüche 1 bis 7, dadurch gekennzeichnet, dass die Schuppen (13) nach dem Kopfteil (1) hin widerhakenartige Sägezähne (15) tragen.

## Revendications

1. Cheville à expansion en matière synthétique présentant un trou d'introduction de vis continu (6), et comportant plusieurs segments à expansion (11), qui sont délimités par des fentes longitudinales (2, 12) du corps de la cheville s'étendant entre la partie de tête de forme annulaire (1) et la partie de base de forme annulaire (5) de la cheville, un taraudage permettant un serrage axial du corps de la cheville pouvant être taillé dans la partie de base au moyen d'une vis à bois conique, la cheville étant caractérisée en ce que les segments à expansion (11) sont divisés par des entailles (4, 14) en parties en forme d'écaille (3; 13) qui se chevauchent, en ce que les entailles (4, 14) sont prévues en oblique, c'est-à-dire dans une enveloppe ou paroi conique ayant une allure rentrante de l'extérieur en direction de la partie de base (5) de la cheville, et en ce que les parties en forme d'écaille (3) sont reliées l'une à l'autre par des nervures (7) qui sont prévues dans le trou d'introduction de vis (6).

2. Cheville à expansion suivant la revendication 1, caractérisée en ce que les nervures (7) sont parallèles à l'axe et s'avancent dans la section transversale du trou d'introduction de vis (6).

3. Cheville à expansion suivant les revendications 1 et 2, caractérisée en ce que les nervures longitudinales (7) se prolongent jusque dans le trou de la partie de base (5) de la cheville.

4. Cheville à expansion suivant la revendication 1, caractérisée en ce que les fentes longitudinales (2) suivent, de façon connue en soi, une direction hélicoïdale et sont taillées dans le sens opposé au sens de rotation du filet de la vis à bois.

5. Cheville à expansion suivant les revendications 1 à 4, caractérisée en ce que les parties en forme d'écaille (3), vues en coupe longitudinale, se présentent en forme de coin et vont en se réduisant de l'intérieur vers l'extérieur.

6. Cheville à expansion suivant l'une quelconque des revendications 1 à 5, caractérisée en ce qu'elle est divisée en quatre segments à expansion (11), par quatre fentes longitudinales (12) parallèles à l'axe, qui se terminent, dans la partie de tête, à l'intérieur de saillies externes (8) destinées à empêcher la cheville de tourner.

7. Cheville à expansion suivant la revendication 6, caractérisée en ce que toutes les entailles (14) de segments à expansion voisins (11) sont prévues en sens opposés et se rapprochent au niveau des fentes longitudinales (12) en forment des V.

8. Cheville à expansion suivant l'une quelconque des revendications 1 à 7, caractérisée en ce que les parties en forme d'écaille (13) portent des dents de scie (15) du genre contre-crochets en direction de la partie de tête (1).

**Claims**

1. A spreadable dowel of plastic having a throughgoing screw insertion bore (6) and several spreadable segments (11) which are formed by longitudinal slots (2; 12) in the body of the dowel and which extend between the annular head part (1) and the annular tip part (5), with a female thread being cuttable in the latter by a conical woodscrew, the female thread facilitating axial stressing of the body of the dowel, characterised in that the spreadable segments (11) are subdivided by cuts (4; 14) into scales (3; 13) which overlap one another; in that the cuts (4; 14) are inclined and/or arranged on the surface of a cone extending from the outside inwards towards the tip (5) of the dowel, and in that the scales (3) are connected with one another via webs (7) at the screw insertion bore (6).

2. A spreadable dowel in accordance with claim 1 characterised in that the webs (7) extend parallel to the axis and project into the cross-section of the screw insertion bore (6).

3. A spreadable dowel in accordance with the claims 1 and 2, characterised in that the longitudinal webs (7) extend right up to the hole in the tip (5) of the dowel.

4. A spreadable dowel in accordance with claim 1 characterised in that the longitudinal slots (2) are helically arranged in known manner and are cut with the opposite hand to the screw thread of the wood screw.

5. A spreadable dowel in accordance with the claims 1 to 4, characterised in that the scales (3) are wedge-shaped, tapering from the inside to the outside when viewed in longitudinal section.

6. A spreadable dowel in accordance with one of the claims 1 to 5, characterised in that it is subdivided by four longitudinal slots into four spreadable segments (11) with the four longitudinal slots extending parallel to axis and running out into the head part (1) inside of external ribs (8) for preventing rotation of the dowel.

7. A spreadable dowel in accordance with claim 6, characterised in that all cuts (14) of neighbouring spreadable segments (11) are arranged in opposite directions and converge in veefashion at the longitudinal slots (12).

8. A spreadable dowel in accordance with one of the claims 1 to 7, characterised in that the scales (13) after the head part (1) carry barb-like saw teeth (15).

FIG.1

FIG.2

FIG.3

# FIG.4

# FIG.6

# FIG.5

# FIG.7